# EUROPEAN PATENT APPLICATION

(11) **EP 1 518 651 A1**
(43) Date of publication of application: **30.03.2005**
(21) Application number: 03733154.3
(22) Date of filing: 29.05.2003
(51) Int. Cl.: B28D 1/14

(54) **METHOD AND DEVICE FOR FORMING HOLES IN GLASS PLATE**

(30) Priority: 28.06.2002 JP 2002191502
(71) Applicant: Bando Kiko Co., Ltd, Tokushima-shi, Tokushima 770-0871 (JP)
(72) Inventor: BANDO, Kazuaki, c/o BANDO KIKO CO., LTD., Tokushima-shi, Tokushima 770-0871 (JP)
(74) Representative: Meissner, Bolte & Partner
(86) International application number: PCT/JP2003/006759
(87) International publication number: WO 2004/002704

(57) **Abstract**

An apparatus (1) for drilling a hole in a glass plate includes recess forming means (8) for forming in a recess forming section (2) a recess (5) in an upper surface (4)of a glass plate (3) and forming therein a recess (6) communicating with the recess (5) in a lower surface (7) of the glass plate (3); chamfering means (10) for light-chamfering, in a chamfering section (9) adjacent to the recess forming section (2), edges (12, 13) of opening of each of the recesses (5, 6) in the glass plate (3) where the recesses (5, 6) have been formed by the recess forming means (8); and transporting means (11) for consecutively transporting to the recess forming section (2) the glass plates (3) in which the recesses (5, 6) are to be formed and for consecutively transporting to the chamfering section (9) the glass plates (3) in which the recesses (5, 6) have been formed.

## Description

### TECHNICAL FIELD

The present invention relates to a method and an apparatus for drilling a hole in a glass plate for forming a through hole in a glass plate for use in such as a window for an automobile and for chamfering the opening of the through hole.

### BACKGROUND ART

Generally, in a case where a hole is drilled in a glass plate for use in a multiplicity of windows for automobiles, by using a recess forming drill, a recess is formed in an upper surface of the glass plate, and a recess communicating with that recess is formed in a lower surface of the glass plate. Then, edges of opening of each of the recesses formed in the upper and lower surfaces of the glass plate are provided with chamfering, generally light-chamfering, by using a chamfering drill.

However, in the case where a hole is drilled in the glass plate in the above-described manner, much time is expended in drilling the hole in the glass plate since recesses are respectively formed in the upper and lower surfaces of the glass plate, and edges of opening of each of the recesses in the upper and lower surfaces of the glass plate are subsequently provided with chamfering. As a result, it is difficult to improve the throughput of the drilled glass plates. Furthermore, the time expended in drilling holes in the glass plate increases as the number of positions of drilling in the glass plate increases.

In addition, for instance, in a case where a hole is drilled in a glass plate by using a pair of recess forming drills with chamfering grinding wheels in which chamfering grinding wheels are exteriorly fitted, a recess is formed in the upper surface of the glass plate by one recess forming drill with a chamfering grinding wheel, and the edge of the opening of the recess is subsequently chamfered. Next, a recess communicating with the recess in the upper surface of the glass plate is formed in the lower surface of the glass plate by using the other recess forming drill with a chamfering grinding wheel, and the edge of the opening of the recess in the lower surface of the glass plate is subsequently chamfered.

However, in the case where a hole is drilled in the glass plate by using the recess forming drills with chamfering grinding wheels, the position of the chamfering grinding wheel must be changed in correspondence with the thickness of the glass plate and the wear of the recess forming drill on each such occasion. Furthermore, the advancement, the speed, and the stroke of the recess forming drill must be changed to effect the recess formation and chamfering with respect to the glass plate. Therefore, the program of a numeral controller becomes complex, and much time is inevitably expended in drilling holes in the glass plate.

The present invention has been devised in view of the above-described aspects, and its object is to provide a method and an apparatus for drilling a hole in a glass plate which make it possible to shorten the time expended in drilling a hole in the glass plate without making the program of the numerical controller complex, thereby making it possible to improve the throughput of drilled glass plates.

### DISCLOSURE OF THE INVENTION

A method of drilling a hole in a glass plate in accordance with a first aspect of the invention comprises: a recess forming step of forming in a recess forming section a recess in one surface of a glass plate and forming therein a recess communicating with the recess in another surface of the glass plate; a chamfering step of chamfering in a chamfering section edges of opening of each of the recesses formed in the one surface and the other surface of the glass plate; and a transporting step of transporting to the recess forming section the glass plate in which the recesses are to be formed and of transporting to the chamfering section the glass plate in which the recesses have been formed in the recess forming section, the recess forming step and the chamfering step being effected concurrently.

In accordance with the method of drilling a hole in a glass plate according to the first aspect of the invention, the recesses are formed in the recess forming section, and chamfering is provided in the chamfering section. Therefore, the program of the controller for implementing this method can be simplified. Furthermore, since the recess forming step and the chamfering step are effected concurrently, it is possible to shorten the time expended in drilling a hole in the glass plate, thereby making it possible to improve the throughput of drilled glass plates.

Concerning a method of drilling a hole in a glass plate in accordance with a second aspect of the invention, in the method of drilling a hole in a glass plate according to the first aspect of the invention, the recess forming step has a plurality of steps of forming pairs of recesses communicating with each other, and in the plurality of steps the formation of each of the pairs of recesses with respect to predetermined different portions of the glass plate is effected concurrently.

In accordance with the method of drilling a hole in a glass plate according to the second aspect of the invention, since the formation of each of the pairs of recesses is effected concurrently, it is possible to substantially shorten the time expended in the formation of recesses in the glass plate in which portions to be drilled are numerous.

Concerning a method of drilling a hole in a glass plate in accordance with a third aspect of the invention, in the method of drilling a hole in a glass plate according to the first or second aspect of the invention, the chamfering step has a step of chamfering the edge of the opening of the recess in the other surface of the glass plate in synchronism with the chamfering of the edge of the opening of the recess in the one surface of the glass plate.

In accordance with the method of drilling a hole in a glass plate according to the third aspect of the invention, since the chamfering of the edge of the opening of the recess in the one surface of the glass plate and the chamfering of the edge of the opening of the recess in the other surface of the glass plate are effected synchronously, the edges of the openings can be chamfered speedily.

Concerning a method of drilling a hole in a glass plate in accordance with a fourth aspect of the invention, in the method of drilling a hole in a glass plate according to the first or second aspect of the invention, the chamfering step has a step of chamfering the edge of the opening of the recess in the one surface of the glass plate, and after the chamfering, chamfering the edge of the opening of the recess in the other surface of the glass plate.

In accordance with the method of drilling a hole in a glass plate according to the fourth aspect of the invention, since the chamfering of the edges of the opening of each of the recesses in both surfaces of the glass plate is effected alternately, it is possible to avoid mutual interference. As a result, it is possible to accurately chamfer the edges of the opening of each of the recesses in the glass plate.

An apparatus for drilling a hole in a glass plate in accordance with a first aspect of the invention comprises: recess forming means for forming in a recess forming section a recess in one surface of a glass plate and forming therein a recess communicating with the recess in another surface of the glass plate; chamfering means for chamfering in a chamfering section edges of opening of each of the recesses formed in the one surface and the other surface of the glass plate by the recess forming means; and transporting means for transporting to the recess forming section the glass plate in which the recesses are to be formed and for transporting to the chamfering section the glass plate in which the recesses have been formed by the recess forming means, the chamfering means being adapted to chamfer the edges of the opening of each of the recesses in the glass plate concurrently with the formation of the recesses in the glass plate by the recess forming means.

In accordance with the apparatus for drilling a hole in a glass plate according to the first aspect of the invention, the recesses are formed in the recess forming section, and chamfering is provided in the chamfering section. Therefore, the program of the controller for implementing this method can be simplified. Furthermore, since the recess forming step and the chamfering step are effected concurrently, it is possible to shorten the time expended in drilling a hole in the glass plate, thereby making it possible to improve the throughput of drilled glass plates.

Concerning an apparatus for drilling a hole in a glass plate in accordance with a second aspect of the invention, in the apparatus for drilling a hole in a glass plate according to the first aspect of the invention, the recess forming means has a plurality of pairs of recess forming drills for forming pairs of recesses communicating with each other in the one surface and the other surface of the glass plate, and the plurality of recess forming drills are adapted to concurrently effect the formation of each of the pairs of recesses with respect to predetermined different portions of the glass plate.

In accordance with the apparatus for drilling a hole in a glass plate according to the second aspect of the invention, since the formation of each of the pairs of recesses is effected concurrently by the plurality of recess forming drills, it is possible to substantially shorten the time expended in the formation of recesses in the glass plate in which portions to be drilled are numerous.

Concerning an apparatus for drilling a hole in a glass plate in accordance with a third aspect of the invention, in the apparatus for drilling a hole in a glass plate according to the second aspect of the invention, the recess forming means has recess-forming-drill vertically moving means for vertically moving the plurality of pairs of recess forming drills with respect to the glass plate, and the recess-forming-drill vertically moving means is adapted to raise and lower synchronously with each other the recess forming drills for forming the recesses in the one surface of the glass plate and to raise and lower synchronously with each other the recess forming drills for forming the recesses in the other surface of the glass plate.

Concerning an apparatus for drilling a hole in a glass plate in accordance with a fourth aspect of the invention, in the apparatus for drilling a hole in a glass plate according to the second or third aspect of the invention, the recess forming means has recess-forming-drill moving means for moving each of the pairs of recess forming drills independently of each other in parallel to the surfaces of the glass plate.

Concerning an apparatus for drilling a hole in a glass plate in accordance with a fifth aspect of the invention, in the apparatus for drilling a hole in a glass plate according to any one of the first to fourth aspects of the invention, the chamfering means has one chamfering drill for chamfering the edge of the opening of the recess in the one surface of the glass plate and another chamfering drill for chamfering the edge of the opening of the recess in the other surface of the glass plate, disposed in such an manner as to oppose the one chamfering drill, and the chamfering means is adapted to effect the chamfering of the edge of the opening of the recess in the other surface of the glass plate by the other chamfering drill in synchronism with the chamfering of the edge of the opening of the recess in the one surface of the glass plate by the one chamfering drill.

In accordance with the apparatus for drilling a hole in a glass plate according to the fifth aspect of the invention, the chamfering means is adapted to effect the chamfering of the edge of the opening of the recess in the other surface of the glass plate by the other chamfering drill in synchronism with the chamfering of the edge of the opening of the recess in the one surface of the glass plate by the one chamfering drill. Therefore, the edges of the openings can be chamfered speedily.

Concerning an apparatus for drilling a hole in a glass plate in accordance with a sixth aspect of the invention, in the apparatus for drilling a hole in a glass plate according to any one of the first to fourth aspects of the invention, the chamfering means has one chamfering drill for chamfering the edge of the opening of the recess in the one surface of the glass plate and another chamfering drill for chamfering the edge of the opening of the recess in the other surface of the glass plate, disposed in such an manner as to oppose the one chamfering drill, and the chamfering means is adapted to effect the chamfering of the edge of the opening of the recess in the one surface of the glass plate by the one chamfering drill, and after that chamfering, to effect the chamfering of the edge of the opening in the other surface of the glass plate by the other chamfering drill.

In accordance with the apparatus for drilling a hole in a glass plate according to the sixth aspect of the invention, the chamfering means is adapted to effect the chamfering of the edge of the opening of the recess in the one surface of the glass plate by the one chamfering drill, and to effect the chamfering of the edge of the opening in the other surface of the glass plate by the other chamfering drill after that chamfering. Therefore, it is possible to avoid mutual interference in the chamfering operation and accurately chamfer the edges of the opening of each of the recesses in the glass plate.

Concerning an apparatus for drilling a hole in a glass plate in accordance with a seventh aspect of the invention, in the apparatus for drilling a hole in a glass plate according to any one of the first to sixth aspects of the invention, the chamfering means has chamfering-drill vertically moving means for vertically moving the one chamfering drill and the other chamfering drill independently of each other with respect to the glass plate.

Concerning an apparatus for drilling a hole in a glass plate in accordance with an eighth aspect of the invention, in the apparatus for drilling a hole in a glass plate according to any one of the first to seventh aspects of the invention, the chamfering means has chamfering-drill moving means for moving the one chamfering drill and the other chamfering drill synchronously with each other in parallel to the surfaces of the glass plate.

In the invention, chamfering is preferably light-chamfering, but the invention is not limited to the same.

In accordance with the invention, it is possible to provide a method and an apparatus for drilling a hole in a glass plate which make it possible to shorten the time expended in drilling a hole in the glass plate without making the program of the numerical controller complex, thereby making it possible to improve the throughput of drilled glass plates.

Next, a more detailed description will be given of a mode for carrying out the invention with reference to a preferred embodiment illustrated in the drawings. It should be noted that the invention is not limited to such an embodiment.

### BRIEF DESCRIPTION OF THE DRAWINGS

Fig. 1 is an explanatory front view of an embodiment of the invention;
Fig. 2 is an explanatory cross-sectional view, taken along line II - II, of the embodiment shown in Fig. 1;
Fig. 3 is an explanatory cross-sectional view, taken along line III - III, of the embodiment shown in Fig. 1;
Fig. 4 is an explanatory cross-sectional view, taken along line IV - IV, of the embodiment shown in Fig. 2;
Fig. 5 is an explanatory cross-sectional view, taken along line V -V, of the embodiment shown in Fig. 2;
Fig. 6 is an explanatory cross-sectional view, taken along line VI -VI, of the embodiment shown in Fig. 2; and
Fig. 7 is an explanatory cross-sectional view of a glass plate drilled by the embodiment shown in Fig. 1.

### EMBODIMENT

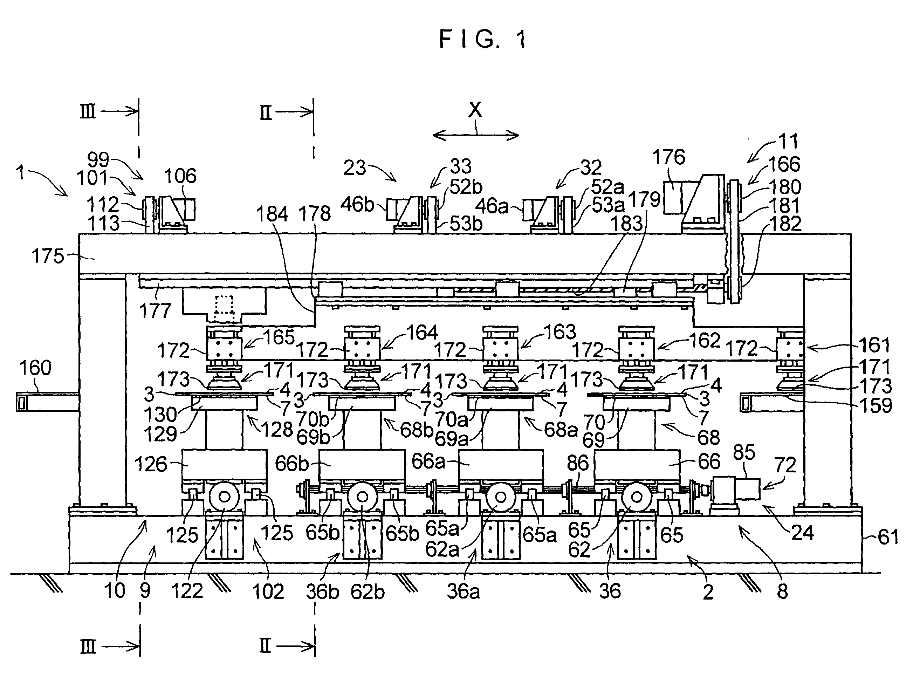

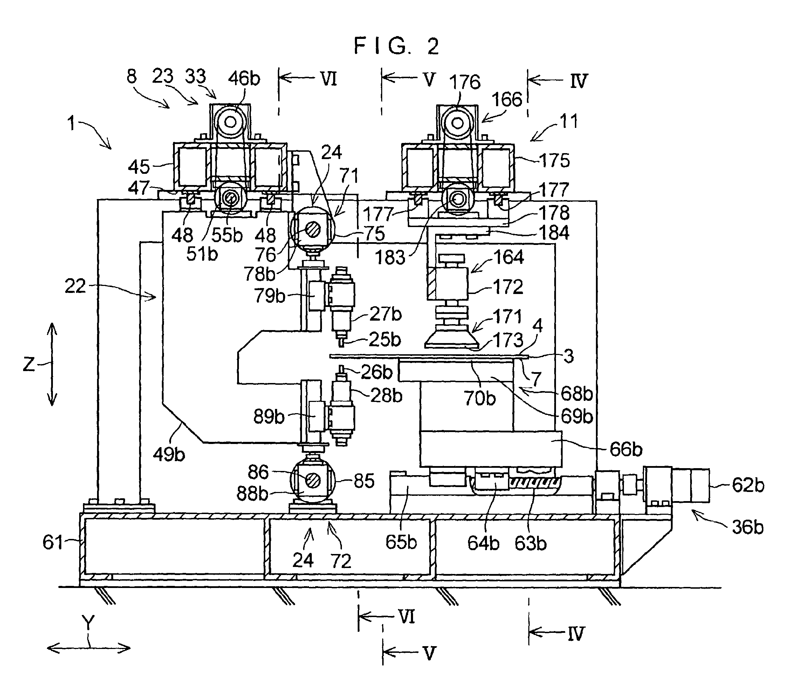

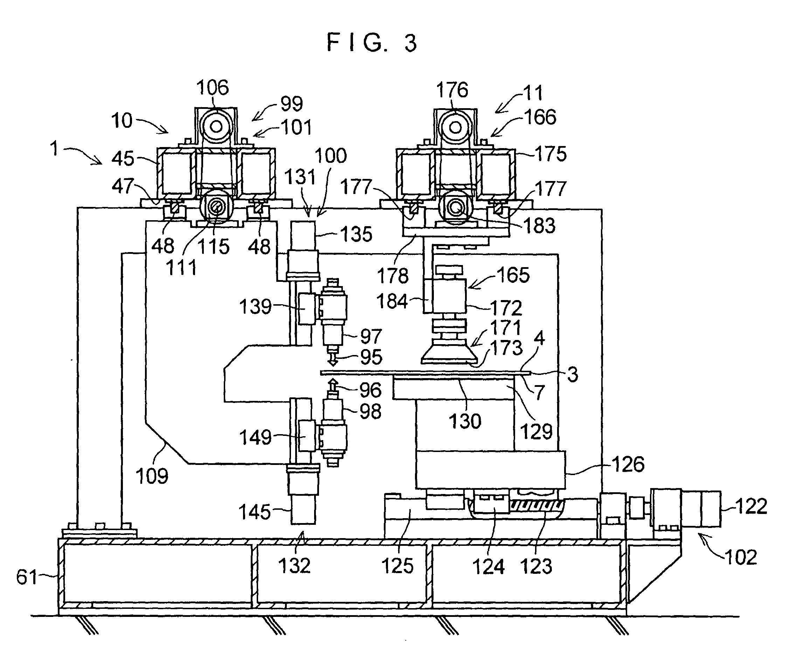

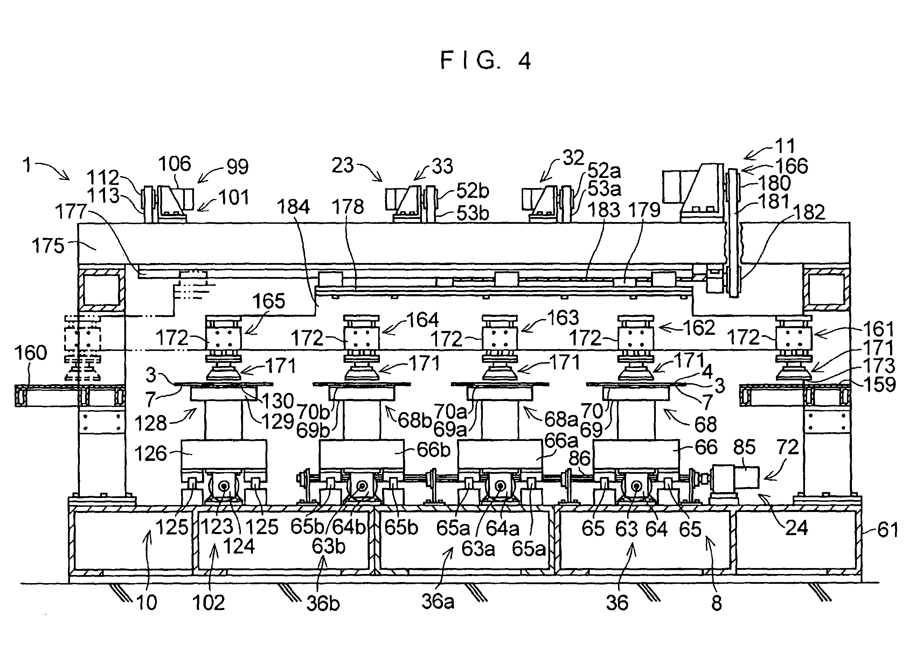

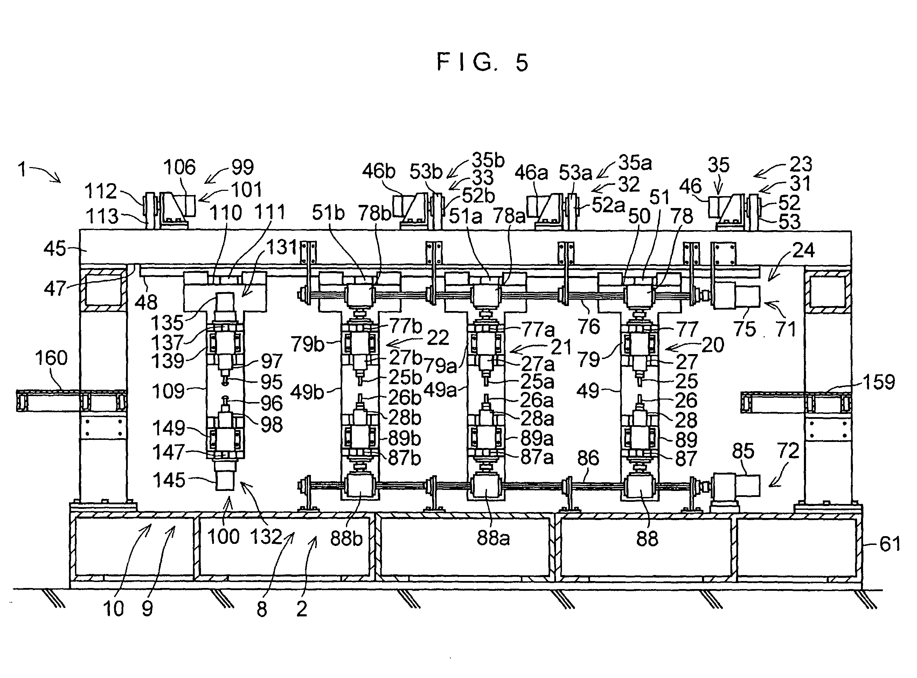

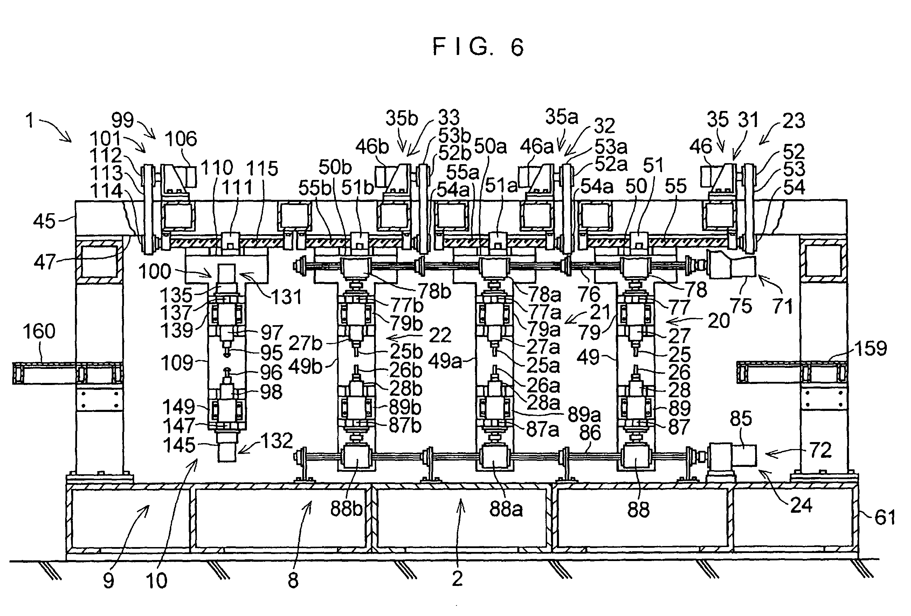

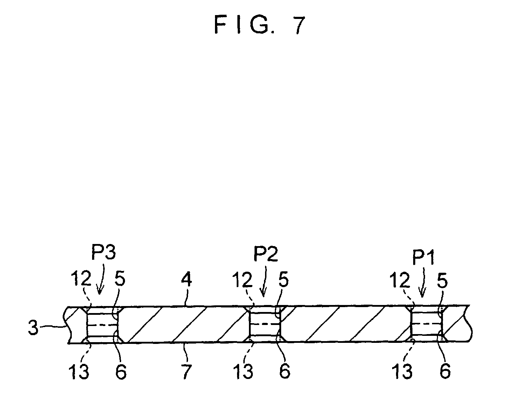

In Figs. 1 to 6, an apparatus 1 for drilling a hole in a glass plate in accordance with this embodiment is comprised of the following: a recess forming means 8 for forming in a recess forming section 2 recesses 5 in an upper surface 4 of a glass plate 3 and recesses 6 communicating with the recesses 5 in a lower surface 7 of the glass plate 3, as shown in Fig. 7; a chamfering means 10 for effecting in a chamfering section 9 adjacent to the recess forming section 2 the chamfering, in this embodiment light-chamfering, of edges 12 and 13 of the respective opening of each of the recesses 5 and 6 in the glass plate 3 where the recesses 5 and 6 have been formed by the recess forming means 8; a transporting means 11 for consecutively transporting to the recess forming section 2 the glass plates 3 in which the recesses 5 and 6 are to be formed, and for consecutively transporting to the chamfering section 9 the glass plates 3 in which the recesses 5 and 6 have been formed by the recess forming means 8; and a numerical controller (not shown) for controlling the above- and below-described operation.

The recess forming means 8 includes a recess forming device 20 for forming the recesses 5 and 6 in a predetermined portion P1 of the glass plate 3; a recess forming device 21 for forming the recesses 5 and 6 in a predetermined portion P2 of the glass plate 3; a recess forming device 22 for forming the recesses 5 and 6 in a predetermined portion P3 of the glass plate 3; a recess-forming-drill moving means 23 for moving recess forming drills 25 and 26, recess forming drills 25a and 26a, and recess forming drills 25b and 26b independently of each other in parallel to the upper surface 4 and the lower surface 7 of the glass plate 3, i.e., in an X direction and a Y direction perpendicular to the X direction; and a recess-forming-drill vertically moving means 24 for moving the recess forming drills 25, 26, 25a, 26a, 25b, and 26b vertically with respect to the glass plate 3, i.e., in a Z direction perpendicular to the X and Y directions. The recess forming devices 20, 21, and 22 are respectively disposed in such a manner as to be juxtaposed to each other in the X direction.

The recess forming devices 20, 21, and 22 are respectively formed in a similar manner. Therefore, a detailed description will be given below of the recess forming device 20. As for the recess forming devices 21 and 22, reference characters a and b will be added in the drawings, as required, and a detailed description thereof will be omitted.

The recess forming device 20 includes the recess forming drill 25 for forming the recess 5 in the upper surface 4 of the glass plate 3; the recess forming drill 26 for forming the recess 6, which communicates with the recess 5, in the lower surface 7 of the glass plate 3; and electric motors 27 and 28 for respectively rotating the recess forming drills 25 and 26. The recess forming drills 25 and 26 are disposed in such a manner as to oppose each other in the Z direction. The electric motors 27 and 28 are respectively connected at one ends of their output rotating shafts to the recess forming drills 25 and 26.

The recess-forming-drill moving means 23 includes a recess-forming-drill moving device 31 for moving the recess forming drills 25 and 26 in the X direction and the Y direction with respect to the upper surface 4 and the lower surface 7 of the glass plate 3; a recess-forming-drill moving device 32 for moving the recess forming drills 25a and 26a in the X direction and the Y direction with respect to the glass plate 3; and a recess-forming-drill moving device 33 for moving the recess forming drills 25b and 26b in the X direction and the Y direction with respect to the glass plate 3.

The recess-forming-drill moving devices 31, 32, and 33 are respectively formed in a similar manner. Therefore, a detailed description will be given below of the recess-forming-drill moving device 31. As for the recess-forming-drill moving devices 32 and 33, reference characters a and b will be added in the drawings, as required, and a detailed description thereof will be omitted.

The recess-forming-drill moving device 31 has an X-direction moving device 35 for moving the recess forming drills 25 and 26 in the X direction with respect to the glass plate 3, as well as a Y-direction moving device 36 for moving the recess forming drills 25 and 26 in the Y direction with respect to the glass plate 3.

The X-direction moving device 35 includes an electric motor 46 mounted on a frame 45 extending in the X direction; a pair of guide rails 48 provided on a lower surface 47 of the frame 45 in such a manner as to extend in the X direction in parallel to each other; a movable frame 49 fitted in the guide rails 48 movably in the X direction; a nut 51 secured to an upper surface 50 of the movable frame 49; and a threaded shaft 55 which is threadedly engaged with the nut 51, is supported rotatably by the frame 45, is connected to an output rotating shaft of the electric motor 46 through a pulley 52, a belt 53, and a pulley 54, and extends in the X direction. The threaded shaft 55 is rotated through the pulley 52, the belt 53, and the pulley 54 by the operation of the electric motor 46. This rotation causes the nut 51 threadedly engaged with the threaded shaft 55 and the movable frame 49 with the nut 51 secured thereto to move in the X direction. The arrangement provided is such that the recess forming drills 25 and 26 are thereby relatively moved in the X direction with respect to the glass plate 3 through movable bases 79 and 89 mounted on the movable frame 49 as well as the electric motors 27 and 28.

The Y-direction moving device 36 includes an electric motor 62 mounted on a base 61; a threaded shaft 63 which is rotatably supported on the base 61, is connected to one end of an output rotating shaft of the electric motor 62, and extends in the Y direction; a nut 64 threadedly engaged with the threaded shaft 63; a pair of guide rails 65 which are secured to the base 61, are disposed with the threaded shaft 63 positioned therebetween, and extend in the Y direction; a movable base 66 to which the nut 64 is secured and which is fitted to the guide rails 65 movably in the Y direction; and a holding base 68 fixed to the movable base 66 and supporting the glass plate 3. The threaded shaft 63 is rotated by the operation of the electric motor 62. This rotation causes the nut 64 threadedly engaged with the threaded shaft 63, the movable base 66 with the nut 64 secured thereto, and the holding base 68 fixed to the movable base 66 to move in the Y direction. The arrangement provided is such that the glass plate 3 held on the holding base 68 is thereby relatively moved in the Y direction with respect to the recess forming drills 25 and 26.

The holding base 68 includes a holding base body 69 mounted on the movable base 66; a suction pad 70 fixed to an upper surface of the holding base body 69; a suction port (not shown) provided in the suction pad 70; and a vacuum suction unit (not shown) communicating with the suction port. The arrangement provided is such that as this vacuum suction unit is operated, the lower surface 7 of the glass plate 3 placed directly on the suction pad 70 is sucked under a vacuum through the suction port communicating with the vacuum suction unit, thereby sucking and holding the glass plate 3.

The recess-forming-drill vertically moving means 24 has a recess-forming-drill vertically moving device 71 for raising and lowering the recess forming drills 25, 25a, and 25b synchronously, as well as a recess-forming-drill vertically moving device 72 disposed in such a manner as to oppose the recess-forming-drill vertically moving device 71 in the Z direction and adapted to raise and lower the recess forming drills 26, 26a, and 26b synchronously.

The recess-forming-drill vertically moving device 71 includes an electric motor 62 mounted on the frame 45; a spline shaft 76 which is rotatably supported on the frame 45, is connected to one end of an output rotating shaft of the electric motor 75, and extends in the X direction; a threaded shaft 77 supported rotatably on the movable frame 49 and extending in the Z direction; a threaded shaft 77a supported rotatably on a movable frame 49a and extending in the Z direction; a threaded shaft 77b supported rotatably on a movable frame 49b and extending in the Z direction; transmitting mechanisms 78, 78a, and 78b for connecting the respective threaded shafts 77, 77a, and 77b to the spline shaft 76 so that the threaded shafts 77, 77a, and 77b become movable in the X direction with respect to the spline shaft 76, and the rotation of the spline shaft 76 is transmitted to the respective threaded shafts 77, 77a, and 77b; a pair of guide rails respectively fixed to the movable frames 49, 49a, and 49b and extending in the Z direction; nuts (not shown) respectively threadedly engaged with the threaded shafts 77, 77a, and 77b; and the movable bases 79, 79a, and 79b to which the nuts are respectively secured, which are respectively fitted to the pair of guide rails, on which the electric motors 27, 27a, and 27b are respectively mounted, and which are movable in the Z direction. The rotation of the output rotating shaft of the electric motor 75 due to its operation rotates the spline shaft 76, and this rotation rotates the threaded shafts 77, 77a, and 77b through the transmitting mechanisms 78, 78a, and 78b. The arrangement provided is such that this rotation synchronously raises and lowers the recess forming drills 25, 25a, and 25b through the nuts and the movable bases 79, 79a, and 79b.

The recess-forming-drill vertically moving device 72 includes an electric motor 85 mounted on the frame 61; a spline shaft 86 which is rotatably supported on the frame 45, is connected to one end of an output rotating shaft of the electric motor 85, and extends in the X direction; a threaded shaft 87 supported rotatably on the movable frame 49 and extending in the Z direction; a threaded shaft 87a supported rotatably on the movable frame 49a and extending in the Z direction; a threaded shaft 87b supported rotatably on the movable frame 49b and extending in the Z direction; transmitting mechanisms 88, 88a, and 88b for connecting the respective threaded shafts 87, 87a, and 87b to the spline shaft 86 so that the threaded shafts 87, 87a, and 87b become movable in the X direction with respect to the spline shaft 86, and the rotation of the spline shaft 86 is transmitted to the threaded shafts 87, 87a, and 87b; a pair of guide rails respectively fixed to the movable frames 49, 49a, and 49b and extending in the Z direction; nuts (not shown) respectively threadedly engaged with the threaded shafts 87, 87a, and 87b; and the movable bases 89, 89a, and 89b to which the nuts are respectively secured, which are respectively fitted to the pair of guide rails, on which the electric motors 28, 28a, and 28b are respectively mounted, and which are movable in the Z direction. The rotation of the output rotating shaft of the electric motor 85 due to its operation rotates the spline shaft 86, and this rotation rotates the threaded shafts 87, 87a, and 87b through the transmitting mechanisms 88, 88a, and 88b. The arrangement provided is such that this rotation synchronously raises and lowers the recess forming drills 26, 26a, and 26b through the nuts and the movable bases 89, 89a, and 89b.

The chamfering means 10 includes a chamfering drill 95 for chamfering the edge 12 of the opening of the recess 5 in the upper surface 4 of the glass plate 3; a chamfering drill 96 for chamfering the edge 13 of the opening of the recess 6 in the lower surface 7 of the glass plate 3; electric motors 97 and 98 for respectively rotating the chamfering drills 95 and 96; a chamfering-drill moving means 99 for moving the chamfering drills 95 and 96 synchronously in parallel to the upper surface 4 and the lower surface 7 of the glass plate 3, i.e., in the X direction and the Y direction; and a chamfering-drill vertically moving means 100 for vertically moving the chamfering drills 95 and 96 independently of each other with respect to the glass plate 3. The electric motors 97 and 98 are respectively connected at one ends of their output rotating shafts to the chamfering drills 95 and 96.

The chamfering-drill moving means 99 has an X-direction moving device 101 for moving the chamfering drills 95 and 96 in the X direction with respect to the glass plate 3, as well as a Y-direction moving device 102 for moving the chamfering drills 95 and 96 in the Y direction with respect to the glass plate 3.

The X-direction moving device 101 includes an electric motor 106 which shares the pair of guide rails 48 with the recess forming means 8 and is mounted on the frame 45; a movable frame 109 fitted in the guide rails 48 movably in the X direction; a nut 111 secured to an upper surface 110 of the movable frame 109; and a threaded shaft 115 which is threadedly engaged with the nut 111, is supported rotatably by the frame 45, and is connected to an output rotating shaft of the electric motor 106 through a pulley 112, a belt 113, and a pulley 114. The threaded shaft 115 is rotated through the pulley 112, the belt 113, and the pulley 114 by the operation of the electric motor 106. This rotation causes the nut 111 threadedly engaged with the threaded shaft 115 and the movable frame 109 with the nut 111 secured thereto to move in the X direction. The arrangement provided is such that the chamfering drills 95 and 96 are thereby moved synchronously in the X direction with respect to the glass plate 3 through movable bases 139 and 149 mounted on the movable frame 109 as well as the electric motors 97 and 98.

The Y-direction moving device 102 includes an electric motor 122 mounted on the base 61; a threaded shaft 123 which is rotatably supported on the base 61, is connected to one end of an output rotating shaft of the electric motor 122, and extends in the Y direction; a nut 124 threadedly engaged with the threaded shaft 123; a pair of guide rails 125 which are secured to the base 61, are disposed with the threaded shaft 123 positioned therebetween, and extend in the Y direction; a movable base 126 to which the nut 124 is secured and which is fitted to the guide rails 125 movably in the Y direction; and a holding base 128 fixed to the movable base 126 and supporting the glass plate 3. The threaded shaft 123 is rotated by the operation of the electric motor 122. This rotation causes the nut 124 threadedly engaged with the threaded shaft, the movable base 126 with the nut 124 secured thereto, and the holding base 128 secured to the movable base 126 to move in the Y direction. The arrangement provided is such that the glass plate 3 held on the holding base 128 is thereby moved synchronously in the Y direction with respect to the chamfering drills 95 and 96.

The holding base 128 includes a holding base body 129 mounted on the movable base 126; a suction pad 130 fixed to an upper surface of the holding base body 129; a suction port (not shown) provided in the suction pad 130; and a vacuum suction unit (not shown) communicating with the suction port. The arrangement provided is such that as this vacuum suction unit is operated, the lower surface 7 of the glass plate 3 placed directly on the suction pad 130 is sucked under a vacuum through the suction port communicating with the vacuum suction unit, thereby sucking and holding the glass plate 3.

The chamfering-drill vertically moving means 100 has a chamfering-drill vertically moving device 131 for raising and lowering the chamfering drill 95, as well as a chamfering-drill vertically moving device 132 disposed in such a manner as to oppose the chamfering-drill vertically moving device 131 in the Z direction and adapted to raise and lower the chamfering drills 96.

The chamfering-drill vertically moving device 131 includes an electric motor 135 mounted on the movable frame 109; a threaded shaft 137 which is rotatably supported on the movable frame 109, is connected to one end of an output rotating shaft of the electric motor 135, and extends in the Z direction; a pair of guide rails fixed to the movable frame 109 and extending in the Z direction; a nut (not shown) threadedly engaged with the threaded shaft 137; and the movable base 139 to which the nut is secured, which is fitted to the pair of guide rails, on which the electric motor 97 is mounted, and which is movable in the Z direction. The rotation of the output rotating shaft of the electric motor 135 due to its operation rotates the threaded shaft 137. The arrangement provided is such that the chamfering drill 95 is thereby raised and lowered in the Z direction through the nut threadedly engaged with the threaded shaft 137, the movable base 139 to which the nut is secured, and the like.

The chamfering-drill vertically moving device 132 includes an electric motor 145 mounted on the movable frame 109; a threaded shaft 147 which is rotatably supported on the movable frame 109, is connected to one end of an output rotating shaft of the electric motor 145, and extends in the Z direction; a pair of guide rails fixed to the movable frame 109 and extending in the Z direction; a nut (not shown) threadedly engaged with the threaded shaft 147; and the movable base 149 to which the nut is secured, which is fitted to the pair of guide rails, on which the electric motor 98 is mounted, and which is movable in the Z direction. The rotation of the output rotating shaft of the electric motor 145 due to its operation rotates the threaded shaft 147. The arrangement provided is such that the chamfering drill 96 is thereby raised and lowered in the Z direction through the nut threadedly engaged with the threaded shaft 147, the movable base 149 to which the nut is secured, and the like.

In this embodiment, the above-described chamfering means 10 is so arranged as to synchronously chamfer the edges 12 and 13 at the portion P1 of the glass plate 3, which is sucked and held by the holding base 128, by the chamfering drills 95 and 96, to synchronously chamfer the edges 12 and 13 at the portion P2 by the chamfering drills 95 and 96, and to synchronously chamfer the edges 12 and 13 at the portion P3 by the chamfering drills 95 and 96.

It should be noted that the chamfering means 10 may be so arranged as to chamfer the edge 12 by the chamfering drill 95 and subsequently chamfer the edge 13 by the chamfering drill 96. Still alternatively, the chamfering means 10 may be so arranged as to chamfer the edge 13 by the chamfering drill 96 and subsequently chamfer the edge 12 by the chamfering drill 95.

As the recess forming drills 25, 26, 25a, 26a, 25b, and 26b and the chamfering drills 95 and 96, respectively, it is preferable to use hollow or solid core drills or the like impregnated with diamond abrasive grains.

The transporting means 11 includes a placing table 159 on which the glass plate 3 to be drilled is placed; a placing table 160 on which the drilled glass plate 3 is placed; lifting devices 161, 162, 163, 164, and 165 for respectively lifting the glass plates 3 on the placing table 159 and the holding bases 68, 68a, 68b, and 128; and a glass-plate moving means 166 for moving in the X direction the glass plates 3 being respectively lifted by the lifting devices 161, 162, 163, 164, and 165. The lifting devices 161, 162, 163, 164, and 165 are respectively juxtaposed in the X direction at equal intervals.

The placing table 159 is disposed on the glass plate 3 carrying-in end side of the apparatus 1 for drilling a hole in a glass plate, while the placing table 160 is disposed on the glass plate 3 carrying-out end side of the apparatus 1 for drilling a hole in a glass plate. The placing tables 159 and 160 and the holding bases 68, 68a, 68b, and 128 are respectively arranged in the X direction at mutually equal intervals.

Each of the lifting devices 161, 162, 163, 164, and 165 has a suction cup head 171 for sucking the glass plate 3 and a cylinder unit 172 for raising or lowering the suction cup head 171. The arrangement provided is such that the glass plate 3 is sucked by the suction cup head 171, and the sucked glass plate 3 is raised by the cylinder unit 172 so as to lift the glass plate 3.

Each of the suction cup heads 171 has a vacuum suction unit (not shown) for sucking under a vacuum the glass plate 3, a suction port communicating with this vacuum suction unit, and a suction pad 173 provided with this suction port. The arrangement provided is such that as the vacuum suction unit is operated, the upper surface 4 of the glass plate 3 is sucked under a vacuum so as to suck and fix the glass plate 3.

Each of the cylinder units 172 consists of a cylinder and a piston rod, and the suction cup head 171 is attached to a distal end of the piston rod. The arrangement provided is such that the piston rod is extended or retracted by air pressure or fluid pressure such as oil pressure applied to the interior of the cylinder, so as to raise or lower the suction cup head 171.

The glass-plate moving means 166 includes a frame 175 juxtaposed to the frame 45 and extending in the X direction; an electric motor 176 mounted on the frame 175; a pair of guide rails 177 mounted on the frame 175 and extending in the X direction; a movable base 178 fitted in the guide rails 177 movably in the X direction; a nut 179 secured to the movable base 178; a threaded shaft 183 which is threadedly engaged with the nut 179, is supported rotatably by the frame 175, is connected to an output rotating shaft of the electric motor 176 through a pulley 180, a belt 181, and a pulley 182, and extends in the X direction; and a bracket 184 which is secured at its one end to the movable base 178 and is secured at its other end to the respective cylinders of the lifting devices 161, 162, 163, 164, and 165. The rotation of an output rotating shaft of the electric motor 176 due to its operation is transmitted to the threaded shaft 183 through the pulley 180, the belt 181, and the pulley 182. As the threaded shaft 183 is rotated, the nut 179 threadedly engaged with the threaded shaft 183, the movable base 178 with the nut 179 secured thereto, the bracket 184 secured to the movable base 178, and the lifting devices 161, 162, 163, 164, and 165 are adapted to move simultaneously in the X direction.

The above-described transporting means 11 is arranged as follows: The suction cup head 171 is lowered by the cylinder unit 172 of the lifting device 161 to cause the suction pad 173 to abut against the upper surface 4 of the glass plate 3 on the placing table 159. The upper surface 4 of the abutted glass plate 3 is sucked under a vacuum at the suction port by the operation of the vacuum suction unit of the suction cup head 171 so as to suck and fix the glass plate 3. The sucked and fixed glass plate 3 is raised by the cylinder unit 172, and the raised glass plate 3 is moved in the X direction by the glass-plate moving means 166 through the lifting device 161 so as to be disposed above the holding base 68. The glass plate 3 disposed above the holding base 68 is lowered by the chamfering drill 172 so as to be placed on the holding base 68. Subsequently, the suction and fixing of the glass plate 3 by the suction cup head 171 is canceled, thereby transporting the glass plate 3 from the placing table 159 onto the holding base 68. After transporting the glass plate 3 in the above-described manner, the transporting means 11 is arranged such that, in order to transport another glass plate 3 from the placing table 159 onto the holding base 68, the suction cup head 171 is raised by the cylinder unit 172, and the lifting device 161 is moved in the X direction by the glass-plate moving means 166 so as to be disposed above the placing table 159. It should be noted that the transporting means 11 is adapted to consecutively transport a plurality of glass plates 3 from the placing table 159 onto the holding base 68 by repeatedly effecting such a transporting operation.

In conjunction with the transport of the glass plate 3 from the placing table 159 onto the holding base 68, the transporting means 11 is also adapted to operate the respective lifting devices 162, 163, 164, and 165 in the same way as the lifting device 161, thereby consecutively transporting the glass plate 3 on the holding base 68 onto the holding base 68a, the glass plate 3 on the holding base 68a onto the holding base 68b, the glass plate 3 on the holding base 68b onto the holding base 128, the glass plate 3 on the holding base 128 onto the placing table 160, respectively.

The numerical controller is adapted to control the electric motors 46, 46a, 46b, 62, 62a, 62b, 75, 85, 106, 122, 135, 145, and 176, the aforementioned vacuum suction units, and the cylinder units 172 by numerical control commands based on a program stored in advance. Such a numerical controller is embodied by using, for example, a microcomputer or the like.

In a case where drilling is effected in the glass plate 3 by the apparatus 1 for drilling a hole in a glass plate, the glass plate 3, which is placed on the placing table 159 and in which in the recesses 5 and 6 are to be formed, is first lifted by the lifting device 161. The lifted glass plate 3 is moved in the X direction by the glass-plate moving means 166 and is disposed above the holding base 68, and the glass plate 3 disposed above the holding base 68 is lowered by the lifting device 161 and is placed on the holding base 68. Next, the glass plate 3 is sucked and held by the holding base 68, and the recess forming drills 25 and 26 are moved in the X direction and the Y direction with respect to the glass plate 3 by the X-direction moving device 35 and the Y-direction moving device 36, to respectively dispose the recess forming drills 25 and 26 above and below the portion P1 of the glass plate 3. After the recess forming drills 25 and 26 are respectively disposed above and below the portion P1, the recess forming drill 25 is rotated by the operation of the electric motor 27, and the recess forming drill 25 is lowered by the recess-forming-drill vertically moving device 71. The recess 5 is thereby formed at the portion P1 in the upper surface 4 of the glass plate 3 with such a depth that a crack, a break, or the like does not occur in the lower surface 7 of the glass plate 3. After the recess 5 is formed at the portion P1, the recess forming drill 25 is raised by the recess-forming-drill vertically moving device 71. Subsequently, the recess forming drill 26 is rotated by the operation of the electric motor 28, and the recess 6 communicating with the recess 5 at the portion P1 is formed at the portion P1 in the lower surface 7 of the glass plate 3 by raising the recess forming drill 26 by the recess-forming-drill vertically moving device 72. After the recess 6 is formed at the portion P1, the recess forming drill 26 is raised by the recess-forming-drill vertically moving device 72. After the recesses 5 and 6 are formed at the portion P1 of the glass plate 3 by the recess forming drills 25 and 26, the suction and holding of the glass plate 3 by the holding base 68 is canceled.

After the recesses 5 and 6 are formed at the portion P1 of the glass plate 3, the glass plate 3, which is placed on the holding base 68 and in which the recesses 5 and 6 have been formed at the portion P3, is lifted by the lifting device 162. The lifted glass plate 3 is moved in the X direction by the glass-plate moving means 166 and is disposed above the holding base 68a, and the glass plate 3 disposed above the holding base 68a is lowered by the lifting device 162 and is placed on the holding base 68a. Next, the glass plate 3 is sucked and held by the holding base 68a, and the recess forming drills 25a and 26a are moved in the X direction and the Y direction with respect to the glass plate 3 by the X-direction moving device 35a and the Y-direction moving device 36a, to respectively dispose the recess forming drills 25a and 26a above and below the portion P2 of the glass plate 3. After the recess forming drills 25a and 26a are respectively disposed above and below the portion P2, the recess forming drill 25a is rotated by the operation of the electric motor 27a, and the recess forming drill 25a is lowered by the recess-forming-drill vertically moving device 71. The recess 5 is thereby formed at the portion P2 in the upper surface 4 of the glass plate 3 with such a depth that a crack, a break, or the like does not occur in the lower surface 7 of the glass plate 3. After the recess 5 is formed at the portion P2, the recess forming drill 25a is raised by the recess-forming-drill vertically moving device 71. Subsequently, the recess forming drill 26a is rotated by the operation of the electric motor 28a, and the recess 6 communicating with the recess 5 at the portion P2 is formed at the portion P2 in the lower surface 7 of the glass plate 3 by raising the recess forming drill 26a by the recess-forming-drill vertically moving device 72. After the recess 6 is formed at the portion P2, the recess forming drill 26a is raised by the recess-forming-drill vertically moving device 72. After the recesses 5 and 6 are formed at the portion P2 of the glass plate 3 by the recess forming drills 25a and 26a, the suction and holding of the glass plate 3 by the holding base 68a is canceled.

After the recesses 5 and 6 are formed at the portion P2 of the glass plate 3, the glass plate 3, which is placed on the holding base 68a and in which the recesses 5 and 6 have been formed at the portion P2, is lifted by the lifting device 163. The lifted glass plate 3 is moved in the X direction by the glass-plate moving means 166 and is disposed above the holding base 68b, and the glass plate 3 disposed above the holding base 68b is lowered by the lifting device 163 and is placed on the holding base 68b. Next, the glass plate 3 is sucked and held by the holding base 68b, and the recess forming drills 25b and 26b are moved in the X direction and the Y direction with respect to the glass plate 3 by the X-direction moving device 35b and the Y-direction moving device 36b, to respectively dispose the recess forming drills 25b and 26b above and below the portion P3 of the glass plate 3. After the recess forming drills 25b and 26b are respectively disposed above and below the portion P3, the recess forming drill 25b is rotated by the operation of the electric motor 27b, and the recess forming drill 25b is lowered by the recess-forming-drill vertically moving device 71. The recess 5 is thereby formed at the portion P3 in the upper surface 4 of the glass plate 3 with such a depth that a crack, a break, or the like does not occur in the lower surface 7 of the glass plate 3. After the recess 5 is formed at the portion P3, the recess forming drill 25b is raised by the recess-forming-drill vertically moving device 71. Subsequently, the recess forming drill 26b is rotated by the operation of the electric motor 28b, and the recess 6 communicating with the recess 5 at the portion P3 is formed at the portion P3 in the lower surface 7 of the glass plate 3 by raising the recess forming drill 26b by the recess-forming-drill vertically moving device 72. After the recess 6 is formed at the portion P3, the recess forming drill 26b is raised by the recess-forming-drill vertically moving device 72. After the recesses 5 and 6 are formed at the portion P3 of the glass plate 3 by the recess forming drills 25b and 26b, the suction and holding of the glass plate 3 by the holding base 68b is canceled. It should be noted that, as for the recess forming drills 25, 25a, and 25b, since they are respectively raised and lowered synchronously with each other by the recess-forming-drill vertically moving device 71, the recess forming drills 25, 25a, and 25b synchronously form the recesses 5 to be formed in the glass plates 3 being respectively sucked and held by the holding bases 68, 68a, and 68b. In addition, as for the recess forming drills 26, 26a, and 26b, since they are respectively raised and lowered synchronously with each other by the recess-forming-drill vertically moving device 72, the recess forming drills 26, 26a, and 26b synchronously form the recesses 6 to be formed in the glass plates 3 being respectively sucked and held by the holding bases 68, 68a, and 68b.

After the recesses 5 and 6 are formed at the portions P1, P2, and P3 of the glass plate 3, the glass plate 3, which is placed on the holding base 68b and in which the recesses 5 and 6 to be formed have been formed, is lifted by the lifting device 164. The lifted glass plate 3 is moved in the X direction by the glass-plate moving means 166 and is disposed above the holding base 128, and the glass plate 3 disposed above the holding base 128 is lowered by the lifting device 164 and is placed on the holding base 128. Next, the glass plate 3 is sucked and held by the holding base 128, and the chamfering drills 95 and 96 are moved in the X direction and the Y direction with respect to the glass plate 3 by the X-direction moving device 101 and the Y-direction moving device 102, to respectively dispose the chamfering drills 95 and 96 above and below the portion P1 of the glass plate 3. After the chamfering drills 95 and 96 are respectively disposed above and below the portion P1, the chamfering drills 95 and 96 are respectively rotated by the operation of the electric motors 97 and 98. As the chamfering-drill vertically moving devices 131 and 132 are synchronously operated, the chamfering drill 95 is lowered, and the chamfering drill 96 is raised in synchronism with that lowering. Thus, the edges 12 and 13 of the opening of each of the recesses 5 and 6 at the portion P1 of the glass plate 3 are synchronously chamfered. Subsequently, the chamfering drill 95 is raised and the chamfering drill 96 is lowered by the chamfering-drill vertically moving devices 131 and 132 such that the chamfering drills 95 and 96 do not come into contact with the upper surface 4 and the lower surface 7 of the glass plate 3.

After the recesses 5 and 6 are chamfered at the portion P1 of the glass plate 3, the chamfering drills 95 and 96 are moved by the X-direction moving device 101 and the Y-direction moving device 102, and are respectively disposed above and below the portion P2 of the glass plate. The chamfering drills 95 and 96 are respectively lowered and raised synchronously by the chamfering-drill vertically moving devices 131 and 132. Thus, the edges 12 and 13 of the opening of each of the recesses 5 and 6 at the portion P2 of the glass plate 3 are synchronously chamfered. Subsequently, the chamfering drill 95 is raised and the chamfering drill 96 is lowered by the chamfering-drill vertically moving devices 131 and 132 such that the chamfering drills 95 and 96 do not come into contact with the upper surface 4 and the lower surface 7 of the glass plate 3.

After the recesses 5 and 6 are chamfered at the portion P2 of the glass plate 3, the chamfering drills 95 and 96 are moved by the X-direction moving device 101 and the Y-direction moving device 102, and are respectively disposed above and below the portion P1 of the glass plate. The chamfering drills 95 and 96 are respectively lowered and raised synchronously by the chamfering-drill vertically moving devices 131 and 132. Thus, the edges 12 and 13 of the opening of each of the recesses 5 and 6 at the portion P3 of the glass plate 3 are synchronously chamfered. Subsequently, the chamfering drill 95 is raised and the chamfering drill 96 is lowered by the chamfering-drill vertically moving devices 131 and 132. After the edges 12 and 13 are chamfered at the portions P1, P2, and P3 of the glass plate 3, the suction and holding of the glass plate 3 by the holding base 128 is canceled.

After the recesses 5 and 6 are formed at the portions P1, P2, and P3 of the glass plate 3, and the edges 12 and 13 of the recesses 5 and 6 are chamfered, the drilled glass plate 3 on the holding base 128 is lifted by the lifting device 165. The lifted glass plate 3 is moved in the X direction by the glass-plate moving means 166 and is disposed above the placing table 160. The glass plate 3 disposed above the placing table 160 is lowered by the lifting device 161 and is placed on the placing table 160.

With the above-described apparatus 1 for drilling a hole in a glass plate, the glass plates 3 are consecutively transported by the transporting means 11, the recesses 5 and 6 are formed in the consecutively transported glass plates 3 on the holding bases 68, 68a, and 68b by the recess forming devices 20, 21, and 22. Concurrently with the formation of the recesses 5 and 6, the glass plate 3 on the holding base 128, where the recesses 5 and 6 have been formed at the respective portions P1, P2, and P3 by the recess forming means 8, is provided with the chamfering of the edges 12 and 13 by the chamfering means 10, thereby consecutively effecting drilling in the multiplicity of glass plates 3. In addition, with the apparatus 1 for drilling a hole in a glass plate, the operation of forming recesses by the recess forming means 8 and the operation of chamfering by the chamfering means 10 are respectively controlled independently of each other by the numerical controller. Hence, the respective operations can be controlled by the numerical controller using a simple program.

It should be noted that the apparatus 1 for drilling a hole in a glass plate in this embodiment may be provided with, instead of the recess forming means 8, a recess forming means having one or a plurality of recess forming devices provided in the number of portions to be drilled in the glass plate 3 and adapted to move each pair of recess forming drills of the recess forming devices in the X and Y directions and to vertically move them in the Z direction. Still alternatively, the apparatus 1 for drilling a hole in a glass plate may be provided with, instead of the chamfering means 10, a chamfering means having a plurality of pairs of chamfering drills provided in the number of portions to be drilled in the glass plate 3 and adapted to move each pair of chamfering drills in the X and Y directions and to vertically move them in the Z direction.

## Claims

1. A method of drilling a hole in a glass plate, comprising:
a recess forming step of forming in a recess forming section a recess in one surface of a glass plate and forming therein a recess communicating with the recess in another surface of the glass plate;
a chamfering step of chamfering in a chamfering section edges of opening of each of the recesses formed in the one surface and the other surface of the glass plate; and
a transporting step of transporting to said recess forming section the glass plate in which the recesses are to be formed and of transporting to said chamfering section the glass plate in which the recesses have been formed in said recess forming section,
the recess forming step and the chamfering step being effected concurrently.

2. The method of drilling a hole in a glass plate according to claim 1, wherein the recess forming step has a plurality of steps of forming pairs of recesses communicating with each other, and in the plurality of steps the formation of each of the pairs of recesses with respect to predetermined different portions of the glass plate is effected concurrently.

3. The method of drilling a hole in a glass plate according to claim 1 or 2, wherein the chamfering step has a step of chamfering the edge of the opening of the recess in the other surface of the glass plate in synchronism with the chamfering of the edge of the opening of the recess in the one surface of the glass plate.

4. The method of drilling a hole in a glass plate according to claim 1 or 2, wherein the chamfering step has a step of chamfering the edge of the opening of the recess in the one surface of the glass plate, and after the chamfering, chamfering the edge of the opening of the recess in the other surface of the glass plate.

5. The method of drilling a hole in a glass plate according to any one of claims 1 to 3, wherein the chamfering step has a step of providing the edge of each of the openings with light-chamfering.

6. An apparatus for drilling a hole in a glass plate, comprising:
recess forming means for forming in a recess forming section a recess in one surface of a glass plate and forming therein a recess communicating with the recess in another surface of the glass plate;
chamfering means for chamfering in a chamfering section edges of opening of each of the recesses formed in the one surface and the other surface of the glass plate by said recess forming means; and
transporting means for transporting to said recess forming section the glass plate in which the recesses are to be formed and for transporting to said chamfering section the glass plate in which the recesses have been formed by said recess forming means,
said chamfering means being adapted to chamfer the edges of the opening of each of the recesses in the glass plate concurrently with the formation of the recesses in the glass plate by said recess forming means.

7. The apparatus for drilling a hole in a glass plate according to claim 6, wherein said recess forming means has a plurality of pairs of recess forming drills for forming pairs of recesses communicating with each other in the one surface and the other surface of the glass plate, and said plurality of recess forming drills are adapted to concurrently effect the formation of each of the pairs of recesses with respect to predetermined different portions of the glass plate.

8. The apparatus for drilling a hole in a glass plate according to claim 7, wherein said recess forming means has recess-forming-drill vertically moving means for vertically moving said plurality of pairs of recess forming drills with respect to the glass plate, and said recess-forming-drill vertically moving means is adapted to raise and lower synchronously with each other said recess forming drills for forming the recesses in the one surface of the glass plate and to raise and lower synchronously with each other said recess forming drills for forming the recesses in the other surface of the glass plate.

9. The apparatus for drilling a hole in a glass plate according to claim 7 or 8, wherein said recess forming means has recess-forming-drill moving means for moving each of said pairs of recess forming drills independently of each other in parallel to the surfaces of the glass plate.

10. The apparatus for drilling a hole in a glass plate according to any one of claims 6 to 9, wherein said chamfering means has one chamfering drill for chamfering the edge of the opening of the recess in the one surface of the glass plate and another chamfering drill for chamfering the edge of the opening of the recess in the other surface of the glass plate, disposed in such a manner as to oppose said one chamfering drill, and said chamfering means is adapted to effect the chamfering of the edge of the opening of the recess in the other surface of the glass plate by said other chamfering drill in synchronism with the chamfering of the edge of the opening of the recess in the one surface of the glass plate by said one chamfering drill.

11. The apparatus for drilling a hole in a glass plate according to any one of claims 6 to 9, wherein said chamfering means has one chamfering drill for chamfering the edge of the opening of the recess in the one surface of the glass plate and another chamfering drill for chamfering the edge of the opening of the recess in the other surface of the glass plate, disposed in such a manner as to oppose said one chamfering drill, and said chamfering means is adapted to effect the chamfering of the edge of the opening of the recess in the one surface of the glass plate by said one chamfering drill, and after the chamfering, to effect the chamfering of the edge of the opening in the other surface of the glass plate by said other chamfering drill.

12. The apparatus for drilling a hole in a glass plate according to claim 10 or 11, wherein said chamfering means has chamfering-drill vertically moving means for vertically moving said one chamfering drill and said other chamfering drill independently of each other with respect to the glass plate.

13. The apparatus for drilling a hole in a glass plate according to any one of claims 10 to 12, wherein said chamfering means has chamfering-drill moving means for moving said one chamfering drill and said other chamfering drill synchronously with each other in parallel to the surfaces of the glass plate.

14. The apparatus for drilling a hole in a glass plate according to any one of claims 6 to 13, wherein said chamfering means is adapted to provide the edge of the opening with light-chamfering.
